# EUROPEAN PATENT APPLICATION

(11) **EP 2 090 710 A1**
(43) Date of publication of application: **19.08.2009**
(21) Application number: 08002654.5
(22) Date of filing: 13.02.2008
(51) Int. Cl.: E04C 2/20, B29C 53/06

(54) **Integrally formed wall panel**

(71) Applicant: Lyngsoe Carpot A/S, 8370 Hadsten (DK)
(72) Inventor: Poulsen, Jesper Birkelund, 8370 Hadsen (DK)
(74) Representative: Kitchen, Steven Richard

(57) **Abstract**

A wall panel (100) integrally formed from a sheet of a polymer material having a main surface (101) and a first edge (102). The wall panel comprises at least one flange (103) formed by bending the sheet along a bending line arranged in a recessed area adjacent to and parallel with said first edge (101). Thereby, the flange (103) is arranged in an angle (a) to the main surface (101).

## Description

### Technical Field

The present invention relates to a wall panel integrally formed from a sheet of polymer material.

### Background Art

It is known to produce elements by thermoforming, i.e. bending, sheets of stiff polymers. However, producing sharp bends that extend along a well-defined bending is difficult as material thickness increases. Thus, bending of thick sheets may produce bends that bulge or even crack.

It is also known to produce wall panels that are substantially flat and are mounted with different mounting arrangements, e.g metal mounting frames.

The object of this invention is to provide a new and improved integrally formed wall element that may be made from sufficiently thick material to withstand wear and tear, and at the same time be mounted in a simple and non-intrusive way.

### Disclosure of Invention

According to the invention, the wall panel is integrally formed from a sheet of a polymer material having a main surface and a first edge, said wall panel comprising at least one flange formed by bending the sheet along a bending line arranged in a recessed area adjacent to and parallel with said first edge. Thereby, the flange is arranged in an angle (a) to the main surface. The at least one flange facilitates easy mounting of the wall panel to the supporting structure surrounding the panel. By ensuring the flange to be substantially parallel to the surface of the supporting structure, the panel may be mounted with simple mounting means, such as screws or bolts.

In an advantageous embodiment, the wall panel is rectangular and has two, three or four flanges that are essentially perpendicular to the main surface. The panel may e.g. be provided with four flanges, two opposite flanges being provided with holes for mounting the panel to frame members of a supporting structure and two opposite flanges being provided for providing additional stiffness to the panel. Common dimensions of the final panel could be 1000mm x 2000mm, 1770mm x 2000mm, and 2060mm x 2000mm, but obviously, the panels could be made in other sizes. Likewise, a typical width of the flange could be 50mm.

Preferably, the recess is provided only on one face of the sheet, this face forming the inside of the bend. The purpose of forming the recessed area is to enable bending the sheet more sharply, or with a smaller bending radius, than possible without the recessed area.

According to a preferred embodiment of the invention, the recessed area along the bending line is provided as a substantially V-shaped bending groove, having two groove faces defining an angle (b). The bending groove could be machined by, e.g. milling, or with a number of cuts with a saw. In particular, fabrication of a bending groove with a 90° bottom angle could be done with e.g. six passes of a saw with a blade oriented normally to the main surface. The blade of the saw could have a V-shape with an angle of 90° between the two sides.

In a third embodiment of the invention, the two groove faces are at least partly in contact. Preferably, the bending groove is formed so that the two groove faces come, at least partly, in contact as the bend is made between the main surface and the flange. In this way, the minimum amount of material needs to be removed, thus preserving the maximum strength in the joint.

According to a fourth embodiment of the invention, the angle (b) between the two groove faces before bending the sheet is substantially 180° minus the angle (a) between the main surface and the flange in the final panel. If the flange is to be bent 90° out of the plane defined by the main surface, the bending groove should have an angle of 90°. Correspondingly, if the flange is to be bent 120° out of the plane, the bending groove should have an angle of 60°. Wall panels with flanges at different angles would enable mounting the panels on a wider range of supporting structures, e.g. to have the panels form the six sides of a hexagonally shaped garden pavilion or the like.

In a fifth embodiment of the invention, the two groove faces are mutually connected after bending, e.g. by welding or gluing the bending groove. This strengthens the joint by regaining at least some of the strength that was lost by removing material to form the bending groove.

In a sixth embodiment of the invention, the polymer material is chosen from the group comprising polymethyl methacrylate (PMMA) and polycarbonate (PC). PMMA, also known as acrylic glass, or simply acrylic, or under trade names such as Plexiglas, is a desirable material for this use since it is transparent, may be coloured, has a higher impact strength than glass, and may be easily thermoformed. Furthermore, if the two groove faces are to be connected to each other, according to the above mentioned embodiment, such a connection may in the case of PMMA be made by, e.g., gluing with cyanoacrylate cement, melting, or by using solvents such as di- or trichloromethane to dissolve the material at the joint, which then fuses and sets to form an almost invisible weld.

According to a seventh embodiment of the invention, the thickness of the panel is 3mm - 13mm, alternatively 5mm - 11mm, yet alternatively 7mm - 9mm. Since the wall panel may be installed outdoors, it must be sufficiently robust to withstand environmental and other influences, e.g. wind loads, and mechanical impact from car doors, balls, etc. Therefore, the sheet needs to have a certain thickness, e.g. 8mm.

In an eight embodiment of the invention, the smallest thickness of the material in the recessed area along the bending line is 2mm - 6mm, alternatively 3mm - 5mm, or yet alternatively 3.5mm - 4.5 mm. The material thickness in the recessed area along the bending line needs to be thick enough to withstand the mechanical forces influencing the panel, but at the same time, the recessed area needs to be sufficiently thin to enable a straight bend with a small bending radius (e.g. 3mm). If too much material is left in the recessed area, the material may cause the bend to buckle or even crack. A preferred thickness is therefore a compromise between these two counteracting demands, where a suitable value could be 4mm.

The invention also relates to a method for manufacturing a wall panel according to the invention, wherein the manufacturing comprises the steps:
- Providing a sheet of a polymer material having at least one recessed region adjacent to and parallel with an edge of the sheet,
- heating the sheet in the recessed area.
- bending the sheet along a bending line in the recessed area to obtain a desired angle (a) between the main surface of the sheet and the flange by bending the sheet, and - allow the bend to cool while the flange is maintained in the bent position. The temperature of the material during the bending depends of the type of polymer material. For PMMA a suitable temperature is in the range 90 - 110°.

According to one embodiment, the recessed area is formed by machining the sheet, e.g. with a saw or by milling. Alternatively, one or more of the recessed areas may be formed in an extrusion process, to enable a large production volume. Naturally, the different processes may be combined, e.g. recessed areas, oriented in one direction being formed in an extrusion process, and recessed areas, oriented in the perpendicular direction being formed by machining.

According to a second embodiment of the invention, the at least one recessed area is formed as a substantially V-shaped bending groove, thus forming two groove faces.

In a third embodiment, relating to the second embodiment above, the two groove faces come, at least partly, into contact when the desired bent angle (a) is reached.

According to a fourth embodiment, relating to the third embodiment above, the two groove faces are mutually connected during the bending process, e.g. by gluing or welding the two faces together.

Finally, the invention relates to the use of a wall panel according to the invention to at least partly form one or more of the sides of a framed building structure, such as a carport.

### Brief Description of the Drawings

The invention is explained in detail below with reference to the drawing, in which
Fig. 1 is a schematically perspective view of a first embodiment of a wall panel according to the invention,
Fig. 2 is a schematic view of the polymer sheet used to make the wall panel in Fig. 1 according to the invention,
Fig. 3 is a sectional view along the line I-I in Fig. 2,
Fig. 4 is sectional views along the line I-I in Fig. 2 but after the sheet has been bent to form the panel, and
Fig. 5 is a schematic view of the use of a number of wall panels according to the invention in a carport.

### Detailed Description

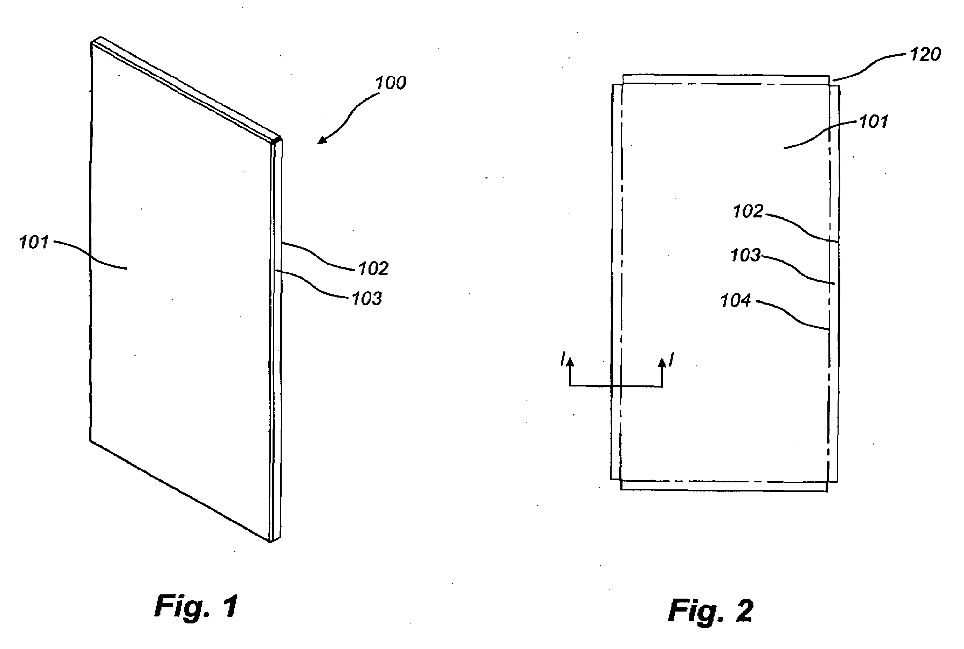

The wall panel 100 illustrated in Fig. 1 is integrally formed from a sheet of polymer material, and comprises a main surface 101, and one or more flanges 103. In the embodiment shown the wall panel comprises four flanges 103, each having an edge 102. Preferably, the panel comprises two, three or four flanges. The flanges may be used to facilitate easy mounting of the panel to a supporting structure, e.g. of a carport 150. By providing the flanges with a number of holes, the panel may be mounted with simple mounting means, such as screws or bolts, extending through the holes in the flanges and into frame members of the supporting structure.

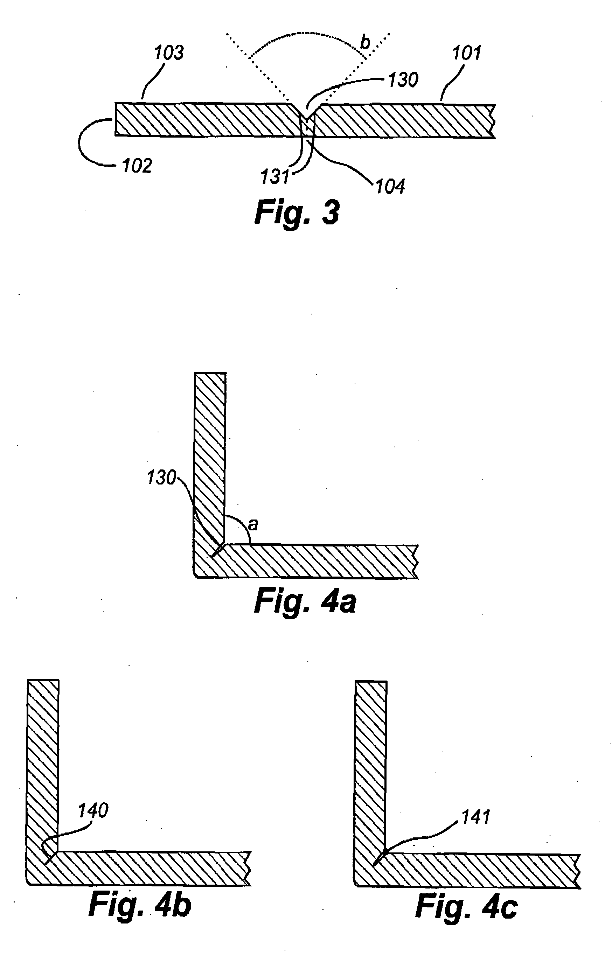

The four flanges of the wall panel shown in Fig. 1 are formed by bending a polymer sheet along four bending lines 104, shown in Fig. 2. However, since the sheet may have a material thickness that makes it difficult if not impossible to achieve a sufficiently small bending radius, the sheet is provided with a recessed area at the bending line 104, adjacent to and parallel with the edge 102. The recessed area is preferably provided as a substantially V-shaped groove 130, comprising two groove faces 131 as shown in Fig. 3. The groove 130 separates the main surface 101 from the flange 103. In wall panel shown in Fig. 1 the flanges form an angle a (see Fig. 4a) of 90° , with respect to the plane defined by the main surface 101. Therefore, the angle b (see Fig. 3) between the two groove faces 131 is chosen to also be 90°, so that the two groove faces come in contact as the sheet is bent.

As the wall panel shown in Fig. 1 is provided with flanges along all four sides, excess material in the corners of the sheet needs to be removed, as shown with the cut-out regions 120 in Fig. 2.

Fig. 4 shows cross-sectional views along the line I-I in Fig. 2, after bending of the sheet along a bending line to form a flange of the wall panel. Fig. 4a shows the wall panel where the bending groove 130 is left partly open after bending. In this embodiment, the two groove faces 131 are at least partly in contact with each other. Fig. 4b shows an embodiment where the two groove faces are glued together in a glue region 140 to strengthen the bend. Fig. 4c shows an embodiment where the two groove faces are welded together in a welded region 141 to strengthen the bend.

A method for manufacturing wall panels 100 is described below with reference to Figs. 3 and 4. Firstly, a sheet of polymethyl methacrylate (PMMA) is provided with V-shaped bending groves 130 along the bending lines 104. Such grooves may be machined or formed by an extrusion process. If two intersecting edges are to be provided with flanges, the corners are cut-out to form cut-out regions 120 (see Fig. 2). Then the sheet is heated to 90-110° along the bending grooves 130 and the sheet is bent to reach a 90° angle a between the flange 103 and main surface 101. Next, the angle a is maintained while the sheet is allowed to cool. Optionally, the bend may be strengthened by ensuring a mutual connection between the two groove faces 131, e.g. by gluing or welding the interface between the two groove faces together.

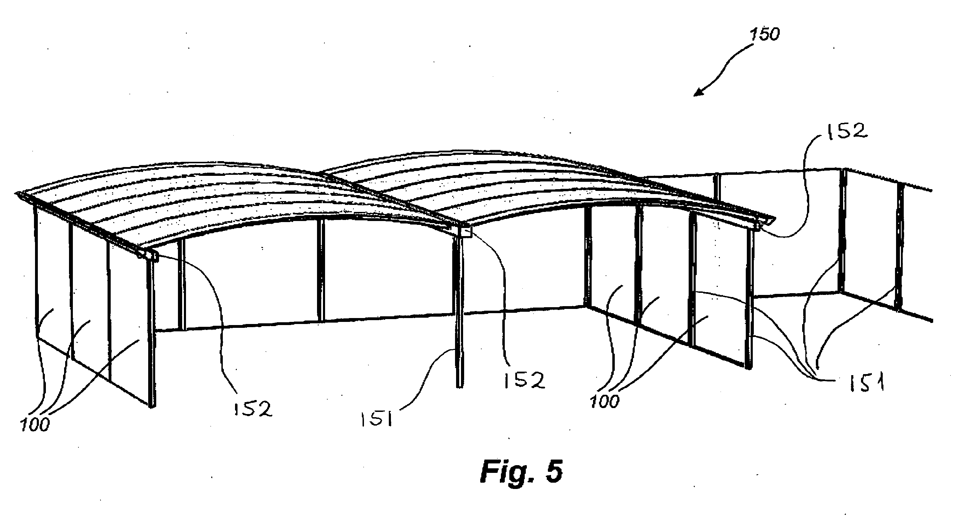

Fig. 5 shows the use of a number of wall panels 100 according to the invention as walls of a carport 150 comprising a steel frame structure. The wall panels 100 are mounted to adjacent upright frame members of the frame structure by means of bolts extending through holes provided in the flanges 103 and into the adjacent upright member. The wall panels may have different dimensions, to account for different distances between various parts of the frame structure.

The invention has been described with reference to preferred embodiments. Many modifications are conceivable without thereby deviating from the scope of the invention. Modifications and variations obvious to those skilled in the art are considered to fall within the scope of the present invention. For example, the flanges may be arranged at other angles than 90°. Also, wall panels which are not rectangular, or with a different number of flanges are conceivable.

### Reference numeral list:

- a, b: Angles
- 100: Wall panel

- 101: Main surface
- 102: Edge
- 103: Flange
- 104: Bending line
- 120: Cut-out region
- 130: Bending groove
- 131: Groove face
- 140: Glue region
- 141: Weld region
- 150: Carport
- 151: Upright frame members
- 152: Horizontal frame members

## Claims

1. Wall panel (100) integrally formed from a sheet of a polymer material having a main surface (101) and a first edge (102), said wall panel comprising at least one flange (103) formed by bending the sheet along a bending line arranged in a recessed area adjacent to and parallel with said first edge (101), whereby the flange (103) is arranged in an angle (a) to the main surface (101).

2. A wall panel according to claim 1, wherein the recessed area along the bending line (104) is provided as a substantially V-shaped bending groove (130), having two groove faces (131) defining an angle (b).

3. A wall panel according to claim 2, wherein the two groove faces (131) are at least partly in contact.

4. A wall panel according to claims 2-3, wherein the angle (b) between the two groove faces (131) before bending the sheet is substantially 180° minus the angle (a) between the main surface and the flange in the final panel.

5. A wall panel according to claims 2-4, wherein the two groove faces (131) are mutually connected after bending, e.g. by welding or gluing the bending groove (221).

6. A wall panel according to any of the preceding claims, wherein the polymer material is chosen from the group comprising polymethyl methacrylate (PMMA) and polycarbonate (PC).

7. A wall panel according to any of the preceding claims, wherein the thickness of the panel (100) is 3mm - 13mm, alternatively 5mm - 11mm, yet alternatively 7mm - 9mm.

8. A wall panel according to any of the preceding claims, wherein the smallest thickness of the material in the recessed area along the bending line (104) is 2mm - 6mm, alternatively 3mm - 5mm, or yet alternatively 3.5mm - 4.5 mm.

9. Method for manufacturing a wall panel according to any of the preceding claims, wherein the manufacturing comprises the steps:
- Providing a sheet of a polymer material having at least one recessed region adjacent to and parallel with an edge of the sheet,
- heating the sheet in the recessed area,
- bending the sheet along a bending line (104) in the recessed area to obtain a desired angle (a) between the main surface (101) and the flange (103), and
- allow the bend to cool while the flange is maintained in the bent position.

10. Use of wall panel according to any of the claims 1 - 8, to at least partly form one or more of the sides of a building structure, such as a carport (150).
